# EUROPÄISCHE PATENTSCHRIFT

(11) **EP 1 873 023 B1**
(45) Veröffentlichungstag und Bekanntmachung des Hinweises auf die Patenterteilung: **20.07.2011**
(21) Anmeldenummer: 07109360.3
(22) Anmeldetag: 31.05.2007
(51) Int. Cl.: B60R 21/23

(54) **Seitengassackanordnung**
Side gas bag assembly
Agencement de masque à gaz latéral

(30) Priorität: 29.06.2006 DE 202006010362 U
(43) Veröffentlichungstag der Anmeldung: 02.01.2008
(73) Patentinhaber: TAKATA - PETRI AG, 63743 Aschaffenburg (DE)
(72) Erfinder: Gutmann, Ralf, 89075, Ulm (DE); Heuschmid, Rainer, 89075, Ulm (DE); Getz, Robert, 89081, Ulm (DE); Sievers, Thomas, 89081, Ulm-Lehr (DE); Rist, Holger, 89160, Dornstadt (DE)
(74) Vertreter: Baumgärtel, Gunnar

(56) Entgegenhaltungen:
- EP-A- 1 588 907
- EP-A1- 1 442 946
- WO-A-02/051670
- WO-A-02/085674
- DE-A1- 10 032 106
- DE-A1- 19 635 495
- GB-A- 2 322 338
- US-A- 5 636 862
- US-A1- 2006 119 083

## Beschreibung

Die Erfindung betrifft eine Seitengassackanordnung für ein Fahrzeuginsassen-Rückhaltesystem mit einem zum Schutz eines Fahrzeuginsassen aufblasbaren Gassack nach dem Oberbegriff des Anspruchs 1 sowie eine Seitengassackanordnung nach dem Oberbegriff des Anspruchs 28, wie aus GB-A-2 322 338 bekannt ist.

Es ist bekannt, in einem Fahrzeugsitz einen Seitengassack vorzusehen, der einen Fahrzeuginsassen bei einem Unfall seitlich schützt. Eine Stabilisierung eines derartigen Seitengassacks beim und nach dem Entfalten kann durch die Verwendung von Bändern, beispielsweise aus einem textilen Gewebe, erreicht werden, die bestimmte Regionen des Seitengassacks verstärken oder verschiedene Bereiche des Seitengassacks miteinander verbinden.

In Bezug auf Seitengassäcke, die mehrere aufblasbare Kammern aufweisen, ist bekannt, unterschiedliche Kammern des Gassacks über Bänder miteinander zu verbinden, um die Kammern beim und nach dem Entfalten des Gassacks relativ zueinander zu positionieren.

Das von der vorliegenden Erfindung zu lösende Problem besteht darin, eine Seitengassackanordnung mit einem aufblasbaren Gassack anzugeben, die eine genauere Positionierung des entfalteten Gassacks in einem Fahrzeug als bisher ermöglicht.

Dieses Problem wird durch eine Seitengassackanordnung mit den Merkmalen des Anspruchs 1 und durch eine Seitengassackanordnung gemäß Anspruch 28 gelöst. Bevorzugte Weiterbildungen der Erfindung sind in den Unteransprüchen angegeben.

Danach wird eine Seitengassackanordnung mit einem zum Schutz eines Fahrzeuginsassen vorgesehenen Gassack bereitgestellt, der mindestens zwei aufblasbare Kammern aufweist, die jeweils nach dem Aufblasen eine bestimmte Lage in einem Kraftfahrzeug einnehmen sollen. Des Weiteren ist ein Funktionsband vorgesehen, das mit einem Abschnitt außerhalb des Gassacks festgelegt ist und das mit einem anderen Abschnitt auf mindestens eine der Kammern des Gassacks eine Haltekraft ausübt, die bewirkt, dass die Kammer nach dem Aufblasen die für sie vorgesehene Lage einnimmt.

Das Funktionsband ermöglicht eine gezielte Positionierung einer der Gassackkammern, wodurch die Schutzwirkung des gesamten Gassacks erhöht wird. Dabei ist das Funktionsband mit einem Abschnitt außerhalb des Gassacks befestigt, d.h. es verbindet nicht Kammern des Gassacks miteinander, sondern eine Kammer des Gassacks mit dem Fahrzeug. Unter Kammern des Gassacks werden hierbei nicht ausschließlich verschiedene, aufblasbare Sektionen eines Gassacks verstanden, sondern auch separate (miteinander in Verbindung stehende) aufblasbare Elemente, die zusammen einen Gassack bilden.

Weiterhin ist vorgesehen, mehrere Abschnitte des Funktionsbandes mit dem Gassack zu verbinden. Dies ermöglicht zum einen eine besonders stabile Verbindung des Funktionsbandes mit dem Gassack; zum anderen kann über die Position des Verbindungsstellen eine gezielte Steuerung des Entfaltens des Gassacks erfolgen, der Gassack zusätzlich gerafft werden (wenn die verschiedenen Verbindungsabschnitte des Funktionsbandes mit verschiedenen Gassackabschnitten verbunden sind). Hiermit ist neben der Positionierung der ersten Kammer eine gezielte Formgebung des aufgeblasenen Gassacks möglich, je nach Art des Einbaus oder Verwendung des Gassacks. Es ist natürlich - wie erwähnt - auch möglich, dass nur ein Abschnitt (z.B. ein Ende) des Funktionsbandes an dem Gassack befestigt ist.

In einer besonders bevorzugten Weiterbildung der Erfindung erstreckt sich von den Kammern des Gassacks nach Entfalten des Gassacks eine erste Kammer in Bezug auf die vertikale Fahrzeugachse zumindest abschnittsweise unterhalb der anderen Kammern und das Funktionsband übt die Haltekraft auf die erste Kammer aus.

Mit dieser Ausgestaltung der Seitengassackanordnung ist eine gezielte Positionierung der ersten (unteren) Kammer des Gassacks in Bezug auf den zu schützenden Fahrzeuginsassen möglich. Insbesondere kann das die Haltekraft ausübende Funktionsband so ausgebildet und angebracht sein, dass es die Kammer beim Entfalten in gewissem Maße "zurückhält", so dass vermieden wird, dass die aufgeblasene Kammer zu weit in Richtung auf den Fahrzeuginsassen umklappt oder durch eine weitere Kammer des Gassacks nach oben bzw. vor eine Körperregion des Fahrzeuginsassen gezogen wird, zu deren Schutz die erste Kammer gar nicht ausgelegt ist.

Das Funktionsband muss eine ausreichende Reißfestigkeit aufweisen, damit es beim Entfalten die Gassack-Kammer sicher in zurückhält und nicht durch eine beim Entfalten des Gassacks wirkende Zugkraft reißt. Es kann z.B. aus einem Kunststoff oder einem textilen Gewebe gebildet sein, wobei die Verwendung eines textilen Gewebes ein Vernähen des Funktionsbandes mit dem Gassack erlauben würde.

In einer besonders bevorzugten Ausgestaltung des Seitengassacks ist die erste Kammer zum Schutz der Pelvisregion des Fahrzeuginsassen ausgebildet. Das Funktionsband (d.h. die vom Funktionsband auf die Kammer ausgeübte Haltekraft) verhindert hier insbesondere, dass sich die Pelviskammer nach Entfalten vollständig oder mit einem Abschnitt im Bereich des Thorax oder auf Höhe des Thorax des Fahrzeuginsassen erstreckt. Zusätzlich kann vorgesehen sein, dass eine zweite Kammer des Seitengassacks der Thoraxregion und zusätzlich eine dritte Kammer der Kopfregion des Fahrzeuginsassen zugeordnet sind.

Da die Pelvisregion (Beckenregion) eines Fahrzeuginsassen biomechanisch stärker belastbar ist als der oberhalb der Pelvisregion befindliche Thoraxbereich, ist die Pelviskammer so ausgebildet, dass sie einen Innendruck aufweist, der höher ist als der Innendruck in der dem Thorax des Fahrzeuginsassen zugeordneten Kammer (Thoraxkammer). Daher muss vermieden werden, dass die Pelviskammer beim Entfalten des Gassacks in den Rippenbereich des Fahrzeuginsassen gerät und dieser möglicherweise mit einem Bereich der Rippenregion auf die mit hohem Druck gefüllte Pelviskammer aufprallt und nicht auf die mit niedrigerem Druck befüllte Thoraxkammer.

Dies wird durch die vorliegende Erfindung erreicht, da die Pelviskammer über das Funktionsband gezielt positioniert werden kann. Die Pelviskammer wird durch das Funktionsband so zurückgehalten, dass sie einerseits nicht in den Rippenbereich des Fahrzeuginsassen gerät, andererseits aber eine Position einnimmt, die einen optimalen Schutz des Pelvisbereiches des Fahrzeuginsassen bietet.

In einer vorteilhaften Weiterbildung der Erfindung ist das Funktionsband an der ersten Kammer des Gassacks befestigt, d.h. z.B. an der Pelviskammer des Gassacks. Die erste Kammer kann hier z.B. durch einen Randbereich begrenzt sein und ein Abschnitt des Funktionsbandes an diesem Randbereich befestigt sein, z.B. durch Verkleben oder Annähen. Um ein gezieltes Zurückhalten der ersten (unteren) Kammer des Seitengassacks zu erzielen, kann es zweckmäßig sein, das Funktionsband auf Seiten des Gassacks im unteren Bereich (in Bezug auf die vertikale Fahrzeugachse) der ersten Kammer zu befestigen. Dies ist jedoch nicht zwingend; die konkrete Art der Verbindung des Funktionsbandes mit dem Gassack wird entsprechend der Erfordernisse gewählt. Wesentlich ist nur, dass die erste Kammer des Gassacks nach dem Entfalten die gewünschte Position einnimmt.

Damit das Funktionsband eine Haltekraft auf eine Kammer des Gassacks (z.B. die untere Kammer) ausüben kann, wird der außerhalb des Gassacks befestigte Abschnitt des Funktionsbandes vorteilhafterweise an einem Fahrzeugteil befestigt. Gleichzeitig ist z.B. ein anderer Abschnitt des Funktionsbandes mit einer Kammer des Gassacks verbunden, oder auch mit einem anderen Abschnitt des Gassacks. Es muss in jedem Fall jedoch gewährleistet sein, dass vom Funktionsband eine Haltekraft auf eine Kammer des Gassacks ausgeht, was auch der Fall sein kann, wenn das Funktionsband mit dem Gassack außerhalb der Kammer verbunden ist.

Der außerhalb des Gassacks festgelegte Abschnitt des Funktionsbandes kann z.B. an einem Teil des Fahrzeugsitzes, eines Gassackmoduls (entweder an dem Gassackmodul, dem der Gassack zugehört oder einem weiteren Gassackmodul) oder der Fahrzeugkarosserie befestigt sein.

Über die Länge des Funktionsbandes und seine Anordnung in Bezug auf den Gassack (d.h. in Bezug auf den Ort seiner Befestigung an dem Gassack einerseits und den Befestigungspunkt an einem Fahrzeugteil andererseits) kann die Lage der entfalteten Kammer eingestellt werden.

In einer vorteilhaften Ausgestaltung ist das Funktionsband mehrlagig ausgebildet und kann dabei insbesondere eine Schlaufe oder eine Tasche bilden. Im Falle der Schlaufe werden z.B. die beiden losen Enden übereinander an dem Gassack befestigt, während das geschlossene Ende der Schlaufe das freie Ende des Funktionsbandes bildet und das Funktionsband somit eine Art "Griff" an dem Gassack ausbildet. Prinzipiell ist aber die Geometrie des Funktionsbandes frei wählbar und hängt u.a. von der konkreten Ausgestaltung des Gassacks ab.

Darüber hinaus kann ein zusätzliches Funktionsband vorgesehen sein, das mindestens zwei Abschnitte (z.B. zwei Kammern) des Gassacks miteinander verbindet. Dies erlaubt eine exakte Positionierung zweier Abschnitte des Gassacks zueinander. Inwieweit zusätzliche Funktionsbänder erforderlich oder zweckmäßig sind, hängt von der Umgebung des montierten Gassacks und seiner konkreten Ausgestaltung bzw. des Gassackmoduls, das den Gassack umfasst, ab.

Eine weitere Variante zur Befestigung des Funktionsbandes an dem Gassack sieht vor, dass das Funktionsband zumindest abschnittsweise innerhalb des Gassacks verläuft. Dies kann einerseits so verwirklicht sein, dass der Gassack eine Einstülpung aufweist, in der ein Endabschnitt des Funktionsbandes verläuft, der in der Einstülpung mit dem Gassack verbunden ist. Andererseits kann "innerhalb" auch bedeuten, dass das Funktionsband über eine Öffnung in der Gassackwand mit einem Abschnitt in das Gassackinnere hineinragt und an einem Abschnitt der Innenseite des Gassacks befestigt ist. Dass über die Öffnung in der Gassackwand Gas nach außen austreten kann, muss dabei bei der Auslegung des Gassacks berücksichtigt werden.

In einer weiteren Variante weist das Funktionsband eine Naht auf, die zur Verkürzung der wirksamen Länge des Funktionsbandes mindestens zwei Abschnitte des Funktionsbandes miteinander verbindet, und die so ausgebildet ist, dass sie beim Entfalten des Gassacks reißt. Hiermit wird z.B. ein kompaktes Zusammenfalten des Gassacks ermöglicht, ohne die wirksame Länge des Funktionsbandes kürzen zu müssen. Zusätzlich oder alternativ ist das Funktionsband so ausgebildet ist, dass es sich beim Aufblasen des Gassacks mit Gas füllt, wodurch die Steifigkeit des Funktionsbandes und damit des gesamten Seitengassacks erhöht wird.

Das Funktionsband ist mit einem Ende mit dem Gassack vernäht oder auf eine andere Weise verbunden, kann aber auch einstückig mit dem Gassack ausgebildet sein. Dies dadurch, dass beim Herstellen des Gassackzuschnitts das Funktionsband mit ausgebildet wird.

In einer besonders bevorzugten Ausbildung der Seitengassackanordnung weist diese einen Gasgenerator zum Aufblasen des Gassacks sowie eine Haltevorrichtung ("Bracket") zum Befestigen des Gasgenerators an einem Teil des Fahrzeugsitzes oder der Fahrzeugkarosserie auf.

Bevorzugt weist die Haltevorrichtung einen Befestigungsabschnitt auf, über den sie mit einem Teil des Fahrzeugsitzes oder der Fahrzeugkarosserie verbunden werden kann. Der Befestigungsabschnitt kann z.B. längserstreckt ausgebildet sein und stellt ein mit einem weiteren Bestandteil der Haltevorrichtung verbindbares, separates Teil dar.

In einer vorteilhaften Ausführung betreffend die Befestigung des Funktionsbandes an einem Fahrzeugteil ist ein Abschnitt, insbesondere ein freies Ende, des Funktionsbandes zusammen mit dem Befestigungsabschnitt an einem Teil des Fahrzeugsitzes oder der Fahrzeugkarosserie befestigt, insbesondere verschraubt. Hierbei ist ein Ende (das "feste Ende") des Funktionsbandes fest mit dem Seitengassack verbunden, während z.B. das am anderen Ende des Funktionsbandes (gegenüber dem mit dem Gassack verbundenen Ende) mit dem Fahrzeug verbunden ist. Grundsätzlich ist jedoch auch möglich, dass ein Mittelabschnitt des Funktionsbandes mit dem Gassack verbunden ist, wodurch das Band zwei freie Enden aufweisen würde, von denen eines oder beide mit dem Fahrzeug verbunden werden.

In einer weiteren, bevorzugten Ausführung zur Befestigung des Funktionsbandes an einem Fahrzeugteil ist der Befestigungsabschnitt über einen Bolzen mit einem weiteren Teil der Haltevorrichtung verbunden und ein Abschnitt des Funktionsbandes ist (zusammen mit dem Befestigungsabschnitt) an dem Bolzen befestigt. Das Funktionsband ist also mit einem Abschnitt (z.B. einem "freien Ende") an dem Befestigungsabschnitt der Haltevorrichtung befestigt und nicht unmittelbar an einem Fahrzeugteil. Die Rückhaltewirkung (d.h. das Zurückhalten der ersten (unteren) Gassack-Kammer) wird auch mit dieser Variante erzielt.

Darüber hinaus kann ein Abschnitt des Funktionsbandes als Schlaufe ausgebildet sein, die an dem Befestigungsabschnitt der Haltevorrichtung eingehängt ist. Die Haltevorrichtung durchgreift hier mit dem Befestigungsabschnitt die Schlaufe, wodurch diese an ihr fixiert (eingehängt) ist. Der Befestigungsabschnitt ist insbesondere längserstreckt ausgebildet und weist einen vom Gassack weg abknickenden Endabschnitt auf, an dem die Schlaufe des Funktionsbandes eingehängt ist. Dies verhindert zusätzlich ein Abrutschen des eingehängten Funktionsbandes von der Haltevorrichtung.

In einer anderen Weiterbildung der Erfindung ist der Gassack Bestandteil eines Gassackmoduls, das von einer Modulabdeckung umgeben ist, wobei ein Abschnitt des Funktionsbandes an der Modulabdeckung befestigt ist. Bevorzugt weist die Modulabdeckung ein oberes Teil und ein unteres Teil auf, wobei das obere Teil nach Montage des Gassackmoduls in der Lehne eines Fahrzeugsitzes einer Seitenfläche der Lehne zugewandt ist, während das untere Teil der Seitenfläche abgewandt ist, und ein Abschnitt des Funktionsbandes mit dem unteren Teil verbunden ist. In einer bevorzugten Ausbildung weist das untere Teil der Modulabdeckung eine (z.B. einstückig mit der Modulabdeckung gebildete) Befestigungslasche auf, an die Abschnitt des Funktionsbandes eingehängt ist.

In einem zweiten Aspekt der Erfindung wird eine Seitengassackanordnung für ein Fahrzeuginsassen-Rückhaltesystem bereitgestellt mit einem aufblasbaren Gassack, einem Gasgenerator zum Aufblasen des Gassacks sowie einer Haltevorrichtung, über die der Gasgenerator mit einem Teil eines Fahrzeugsitzes oder einer Fahrzeugkarosserie verbunden werden kann, wobei der Gassack mindestens eine Verbindungsstruktur zum Verbinden des Gassacks mit der Haltevorrichtung aufweist. Die Verbindungsstruktur ist an einem an dem Gassack befestigten Funktionsband vorgesehen.

Das Funktionsband weist hier mindestens zwei Verbindungsstrukturen zum Verbinden mit der Haltevorrichtung auf, wobei wahlweise jeweils nur eine der Verbindungsstrukturen mit der Haltevorrichtung zu verbinden ist. In einer bevorzugten Weiterbildung sind die Verbindungsstrukturen so ausgebildet und vorgesehen sind, dass die Form, die der Gassack nach dem Entfalten aufweist, davon abhängt, welche der Verbindungsstrukturen mit dem Befestigungsmittel verbunden ist.

Hierdurch ist eine einfache Anpassung des Gassacks an bestimmte Anforderungen möglich, z.B. an die Art des Gassackmoduls oder des Sitzes, in den der Gassack integriert werden soll. Bei zwei Verbindungsstrukturen kann zwischen zwei unterschiedlichen Gassackvarianten (d.h. Formen des entfalteten Gassacks) gewählt werden, wobei die gewünschte Variante durch Befestigen der Haltevorrichtung an einer bestimmten (mit der gewünschten Gassackvariante korrespondierenden) der zur Verfügung stehenden Verbindungsstrukturen des Funktionsbandes festgelegt wird. In einer bevorzugten Weiterbildung ist das Funktionsband entlang einer Oberfläche des Gassacks angeordnet.

Zum Beispiel können Kammern des Gassacks an bestimmte Körperregionen genau angepasst werden, ohne dass diese Anpassung schon bei Herstellung des Gassacks erfolgen muss. Dies vereinfacht die Gassackherstellung, da für unterschiedliche Anwendungen (z.B. unterschiedliche Fahrzeugtypen, in denen der Gassack eingesetzt werden soll) zunächst der gleiche Gassack hergestellt werden kann. Die Anpassung erfolgt erst bei der Montage durch Verbinden des Befestigungsmittels mit einer bestimmten Verbindungsstruktur.

Es versteht sich, dass die Erfindung nicht auf zwei Verbindungsstrukturen beschränkt ist. Es können im Prinzip beliebig viele solcher Verbindungsstrukturen vorgesehen sein. Deren Anzahl richtet sich nach der Ausgestaltung des Gassacks und seiner vorgesehenen Verwendung.

Die Haltevorrichtung weist vorteilhafterweise einen längserstreckten Befestigungsabschnitt zum Verbinden der Haltevorrichtung mit einem Teil eines Fahrzeugsitzes oder einer Fahrzeugkarosserie aufweisen, der sich parallel zu den Schlaufen erstreckt.

Mit "Form" des Gassacks ist insbesondere seine äußere Geometrie (bzw. die Geometrie einzelner Gassack-Kammern) gemeint. Insbesondere kann das Volumen des Gassacks je nach Gassackform variieren. Daher kann das Volumen, das der Gassack nach Entfalten einnimmt, davon abhängen, welche der vorhandenen Verbindungsstrukturen mit dem Befestigungsmittel verbunden ist.

Eine bevorzugte Weiterbildung sieht vor, dass die Verbindungsstrukturen des Funktionsbandes schlaufen- oder taschenförmig ausgebildet sind. Insbesondere weist das Funktionsband quer zu seiner Längsrichtung ausgebildete Schlaufen als Verbindungsstrukturen auf, durch die der Befestigungsabschnitt der Haltevorrichtung hindurch geführt werden kann. Eine Verbindungsschlaufe wird demnach an dem Befestigungsabschnitt eingehängt und somit an ihm befestigt. Das Einhängen erfolgt z.B. so, dass das Funktionsband in gewissem Maße gespannt ist, damit es nicht von der Haltevorrichtung abrutscht.

Bevorzugt erstrecken sich die Schlaufen in Durchführrichtung über die gesamte Breite des Funktionsbandes und sind z.B. durch quer zur Längsrichtung des Funktionsbandes verlaufende Nähte gebildet. Derartige breite Schlaufen ermöglichen eine sichere Verbindung mit der Haltevorrichtung (bzw. dem Befestigungsabschnitt der Haltevorrichtung), da ein Herausrutschen der Haltevorrichtung zusätzlich erschwert ist. Das Funktionsband kann beispielsweise mehrlagig und zwischen den Schlaufen entlang seiner Längsseiten mit dem Gassack vernäht sein.

In einer vorteilhaften Weiterbildung weist der Befestigungsabschnitt der Haltevorrichtung ein Ende auf, das vom Gassack weg abgewinkelt ausgebildet ist und so ein Abrutschen eines an dem Befestigungsabschnitt eingehängten Funktionsbandes zusätzlich verhindert.

Die vorliegende Erfindung wird im Folgenden anhand von Ausführungsbeispielen unter Bezugnahme auf die Figuren näher erläutert. Es zeigen:
- Fig. 1: eine erste Ausführungsform eines Seitengassacks mit Funktionsband;
- Fig. 2a, 2b: eine zweite Ausführungsform eines Seitengassacks mit Funktionsband;
- Fig. 3a - 3c: eine erste Variante der Befestigung des Funktionsbandes an einem Fahrzeugteil;
- Fig. 4a, 4b: eine zweite Befestigungsvariante;
- Fig. 5a - 5d: eine dritte Befestigungsvariante;
- Fig. 6a, 6b: eine vierte Befestigungsvariante;
- Fig. 7a, 7b: eine Variante zur Befestigung des Funktionsbandes an einem Gassack;
- Fig. 8: ein an einem Gassack befestigtes Funktionsband mit Verbindungsschlaufen;
- Fig. 9: einen Gassack mit zusätzlichen Funktionsbändern.

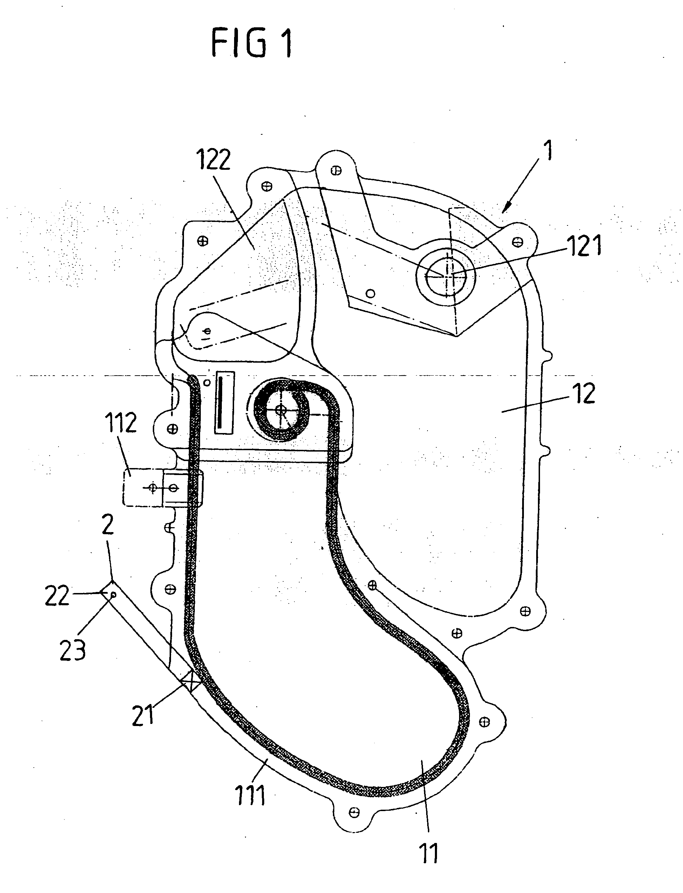

Die Fig. 1 stellt einen Seitengassack 1 im aufgeblasenen Zustand dar, der zwei Kammern 11, 12 aufweist. Die Kammern 11, 12 des Gassacks 1 sind verschiedenen zu schützenden Körperregionen eines Fahrzeuginsassen zugeordnet: Die sich in Bezug auf die vertikale Fahrzeugrichtung unterhalb der Kammer 12 erstreckende Kammer 11 (Pelviskammer) schützt den Beckenbereich (Pelvisbereich) des Fahrzeuginsassen, die oberhalb der Pelviskammer 11 angeordnete Thoraxkammer 12 schützt den Thorax- und den Kopfbereich des Fahrzeuginsassen. Ein sich im Übergangsbereich zur Pelviskammer 11 erstreckender Abschnitt der Thoraxkammer 12 ist mit einer Verstärkungslage 122 versehen, um diesen Bereich des Gassacks vor einem aus einem Gasgenerator (nicht dargestellt) zum Aufblasen des Gassacks ausströmenden (heißen) Gasstrom zu schützen.

Die jeweiligen Innendrücke der Kammern sind hierbei unterschiedlich und der jeweils zu schützenden Körperregion angepasst; der Innendruck in der Thoraxkammer 12 ist geringer als der Druck in der Pelviskammer 11, da der Thoraxbereich eines Menschen biomechanisch weniger belastbar ist als der Pelvisbereich. Die Thoraxkammer 12 weist zur Druckanpassung eine Belüftungsöffnung 121 auf, die einen Teil des in die Kammer 12 einströmenden Gases wieder ableitet, wodurch sich ein niedrigerer Innendruck einstellt.

Die stiefelförmig in Vorwärtsfahrtrichtung abgebogene Pelviskammer 11 ist im unteren Bereich (etwa im Bereich des "Stiefelhackens") mit einem Funktionsband in Form eines Fangbandes 2 verbunden. Dabei ist ein Abschnitt 21 des Fangbandes 2 an einem Abschnitt eines Randbereiches 111 des Gassacks 1, der die Pelviskammer 11 umgibt, angenäht. Der Abschnitt 21 stellt ein Ende des Fangbandes 2 dar. Ein zum dem angenähten Ende 21 beabstandeter Abschnitt des Fangbandes 2 kann mit einem Teil der Fahrzeugkarosserie (bzw. einem Teil eines Fahrzeugsitzes oder einem Teil des Seitengassackmoduls, dem der Seitengassack 1 zugehört) verbunden werden. Insbesondere kann die Befestigung am freien Ende 22 des Fangbandes 2 erfolgen, welches hierfür eine Befestigungsöffnung 23 aufweist.

Durch Verbinden des freien Endes 22 des Fangbandes 2 mit einem Fahrzeugteil wird die aufgeblasene Pelviskammer 11 relativ zu dem durch den Seitengassack zu schützenden Fahrzeuginsassen positioniert, d.h. soweit zurückgehalten, dass sie nicht zu weit in Richtung auf den zu schützenden Fahrzeuginsassen umklappt bzw. nicht durch die Thoraxkammer 12 in den Rippenbereich des zu schützenden Fahrzeuginsassen gezogen wird.

Der Rippenbereich eines Fahrzeuginsassen ist - wie erwähnt - biomechanisch weniger stark belastbar als die Pelvisregion, weshalb die Thoraxkammer 12 mit geringerem Druck befüllt wird als die Pelviskammer 11. Klappt nun die Pelviskammer 11 beim Aufblasen in den Rippenbereich des Fahrzeuginsassen, würde diese Körperregion zumindest teilweise auf die Pelviskammer treffen und nicht wie vorgesehen auf die Thoraxkammer. Dadurch würde die Thoraxregion des Fahrzeuginsassen beim Aufprall biomechanisch zu stark belastet. Dies wird durch Zurückhalten der Pelviskammer 11 mittels des Fangbandes 2 verhindert.

In der Ausgestaltung der Fig. 1 ist das Fangband 2 im Wesentlichen rechteckig ausgebildet und weist mehrere Materiallagen eines textilen Gewebes auf. Die Geometrie des Fangbandes ist jedoch natürlich nicht auf diese Ausgestaltung beschränkt; die Geometrie des Fangbandes wird je nach konkreter Ausgestaltung des Gassacks bzw. des Gassackmoduls gestaltet.

Der Gassack 1 weist zusätzlich am Randbereich 111 eine Lasche 112 auf, deren freies Ende auf den Gassack umgeklappt und mit diesem verbunden werden kann, so dass eine Schlaufe entsteht. Durch diese Schlaufe kann eine Haltevorrichtung (Bracket), die zum Halten eines Gasgenerators (nicht dargestellt) dient, hindurchgeführt werden, wodurch über die Haltevorrichtung gleichzeitig ein Ausrichten des Gassacks erfolgt.

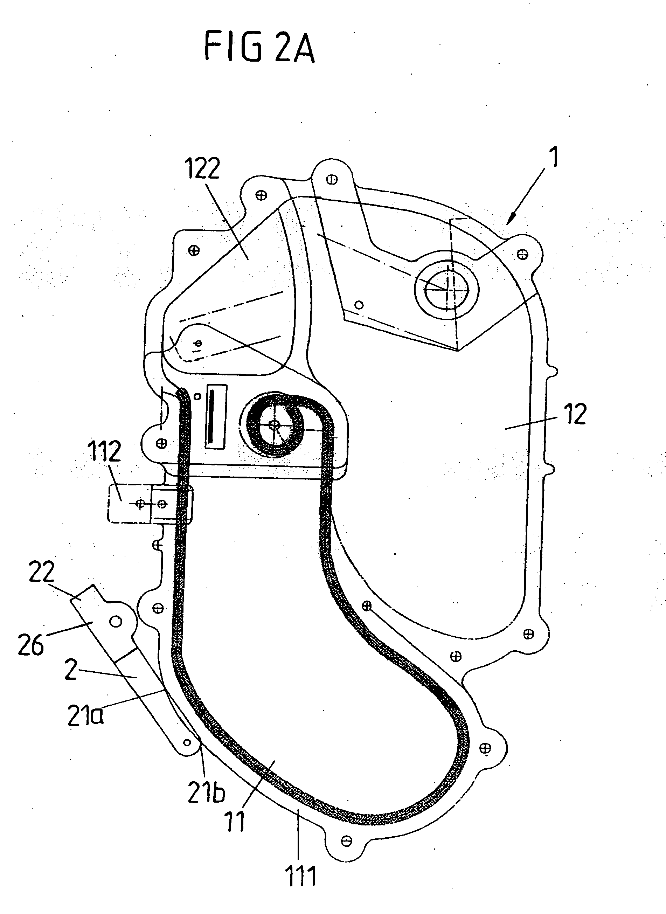

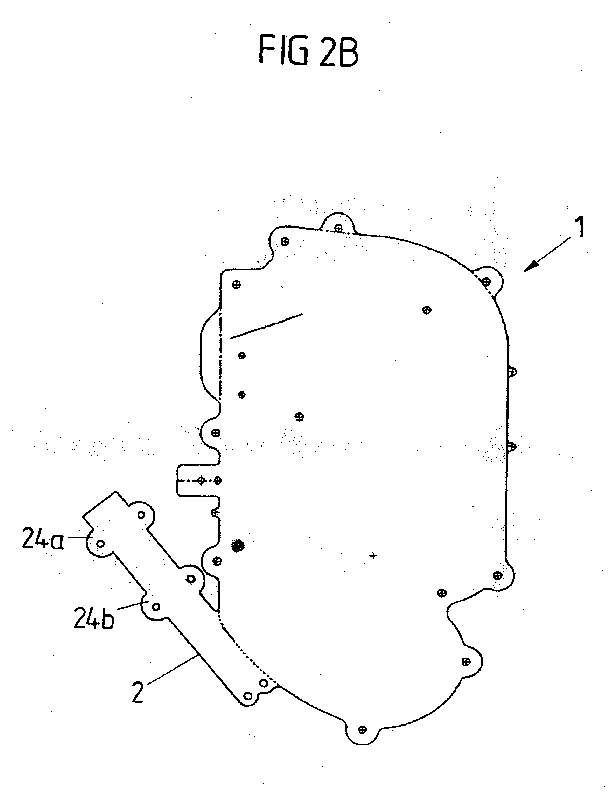

Die Fig. 2a, 2b zeigen einen Seitengassack 1, der vom Aufbau her dem Seitengassack 1 der Fig. 1 entspricht. An einer Pelviskammer 11 ist ein Fangband 2 befestigt, das zur Positionierung der aufgeblasenen Pelviskammer 11 dient. Im Unterschied zum Fangband der Figur 1 ist das Fangband der Fig. 2a, 2b mit zwei Abschnitten 21 a, 21 b an einem die Pelviskammer 11 umgebenden Randbereich 111 des Seitengassacks 1 befestigt - nicht nur mit einem Abschnitt wie in Fig. 1.

Das Fangband 2 der Fig. 2a, 2b ist ebenfalls mehrlagig ausgebildet. Die Fig. 2b (die den Umriss des entfalteten Seitengassacks darstellt) zeigt den "aufgeklappten" Zustand des Fangbandes 2, das zwei Laschenabschnitte 24a, 24b aufweist. Das aufgeklappte Fangband 2 wird zum einen entlang seiner Längssymmetrieachse A umgefaltet. Zum anderen wird das freie Ende des (aufgeklappten) Fangbandes so umgefaltet und am Fanband befestigt, dass der äußere Laschenabschnitt 24a mit dem Laschenabschnitt 24b zusammenfällt. Dadurch entsteht eine Schlaufe 26, über die das Fangband 2 an einem Fahrzeugteil eingehängt werden kann.

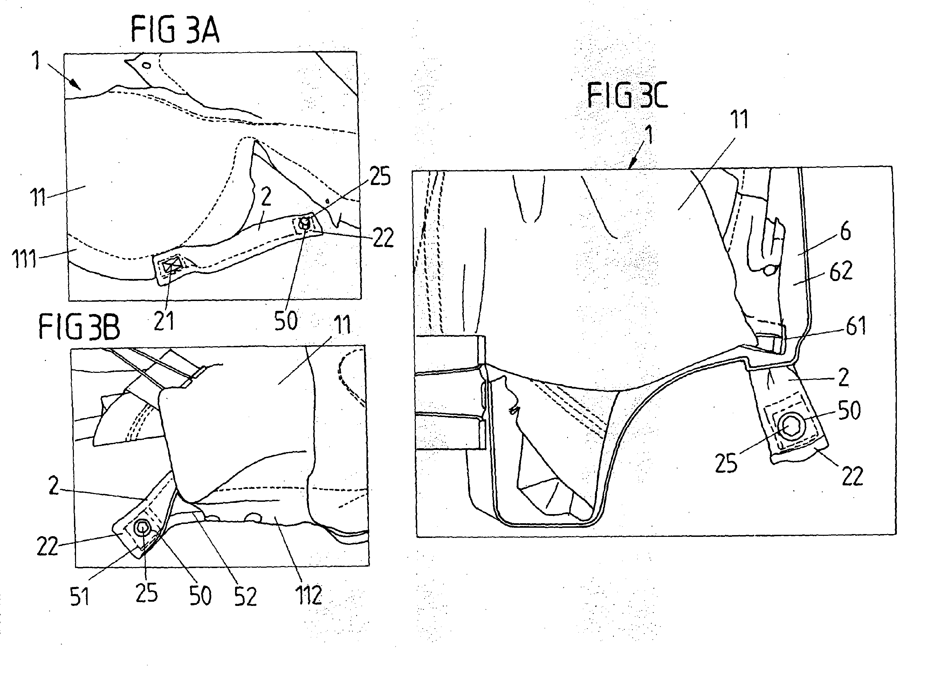

Die Fig. 3a bis 3c zeigen eine erste Variante zum Befestigen eines Abschnitts eines mit einer Pelviskammer 11 eines Seitengassacks 1 verbundenen Fangbandes 2 an einem Fahrzeugteil. Wie in den vorherigen Figuren ist das Fangband 2 an seinem einen Ende 21 an einem Abschnitt eines Randbereichs 111 der Pelviskammer 11 fest angenäht. Ein anderer Abschnitt 22 (das freie Ende) des Fangbandes 2 ist mit einer Schraube 25 an einem Teil der Fahrzeugkarosserie angeschraubt.

In Fig. 3b ist zu erkennen, dass eine am Rand der Kammer 11 ausgebildete Lasche 112 eine Schlaufe bildet, durch die ein längserstrecktes Befestigungsblech 52 einer Haltevorrichtung 5 (Bracket) für einen Gasgenerator geführt ist. Die Haltevorrichtung 5 dient zum Verbinden eines Gasgenerators (nicht dargestellt) mit einem Fahrzeugteil. Das Befestigungsblech 52 stellt einen Befestigungsabschnitt der Haltevorrichtung 5 dar, ist aber als separates Teil ausgebildet.

Ein Ende 51 des Befestigungsbleches 52 ist abgewinkelt und an einem Schraubpunkt 50 mit einem Fahrzeugteil (einem Teil eines Fahrzeugsitzes) verbunden. Zusammen mit dem Ende 51 des Befestigungsbleches 52 ist das freie Ende 22 des Fangbandes 2 ist an dem Schraubpunkt 50 angeschraubt und somit fest mit dem Fahrzeugteil verbunden.

In Fig. 3c ist das freie Ende 22 des Fangbandes 2 wie in Fig. 3b zusammen mit einem Befestigungsblech 52 einer Haltevorrichtung 5 an einem Schraubpunkt 50 verschraubt. Zusätzlich ist ein unteres Teil 6 einer Modulabdeckung zum Abdecken eines Gassackmoduls, dem der Gassack 1 zugehört, angeordnet. Das untere Teil 6 der Modulabdeckung deckt eine Seite Gassackmoduls ab und weist bei einem in einen Fahrzeugsitz eingebauten Gassackmodul ins Innere des Sitzes. Das Teil 6 weist eine Öffnung 61 auf, durch die das freie Ende 22 des Fangbandes 2 auf den Schraubpunkt 50 zu geführt ist.

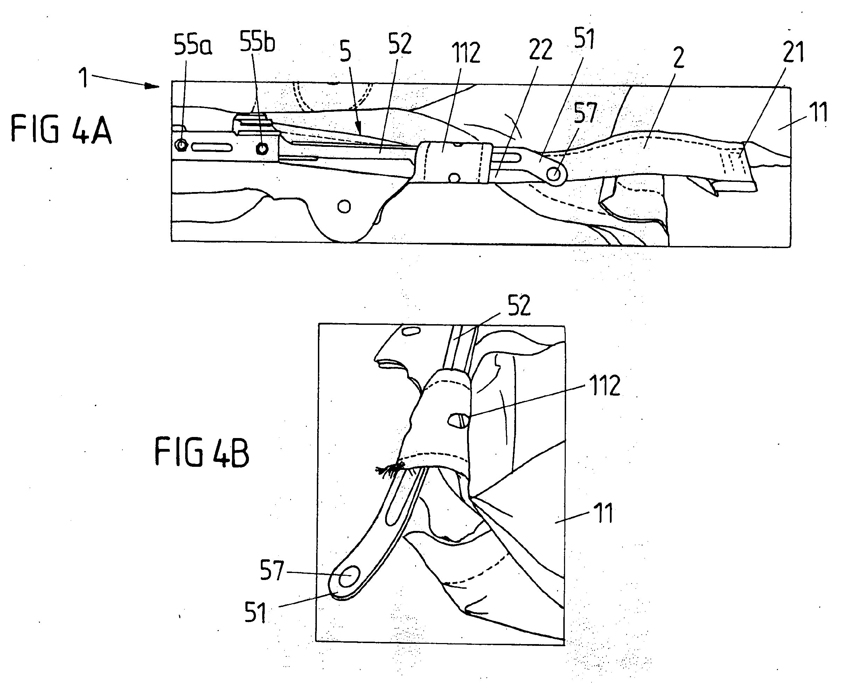

Die Fig. 4a, 4b zeigen eine zweite Variante zum Fixieren eines Abschnittes 22 eines Fangbandes 2 an einem Fahrzeugteil. Der Gassack 1 bzw. das Gassackmodul, dem der Gassack 1 zugehört, weist wiederum eine Haltevorrichtung 5 für einen Gasgenerator (nicht dargestellt) auf, die ein Befestigungsbleches 52 zum Verbinden mit einem Fahrzeugteil besitzt. Das Befestigungsblech 52 ist im Bereich des Gasgenerators mit einem weiteren Teil (Schelle) der Haltevorrichtung verbunden. Die Verbindung erfolgt über Gewindebolzen 55a, 55b.

Das Befestigungsblech 52 erstreckt sich durch eine am Gassackrand vorhandene Schlaufe 112 und weist ein abgewinkeltes Ende 51 mit einer Befestigungsöffnung 57 zum Befestigen der Haltevorrichtung (z.B. mittels einer Schraube) auf. Das Fangband 2 erstreckt vom Gassack ebenfalls durch die Schlaufe 112 und ist zusammen mit dem Befestigungsblech 52 der Haltevorrichtung 5 an dem (in Bezug auf das Fangband 2) vorderen Gewindebolzen 55a befestigt. Dies ist in Fig. 4b in einer anderen Perspektive und vergrößert gezeigt. Hier versteht sich, dass das Fangband nicht unbedingt durch die Schlaufe 112 geführt werden muss, es ist auch möglich, dass sie um die Schlaufe herum verläuft.

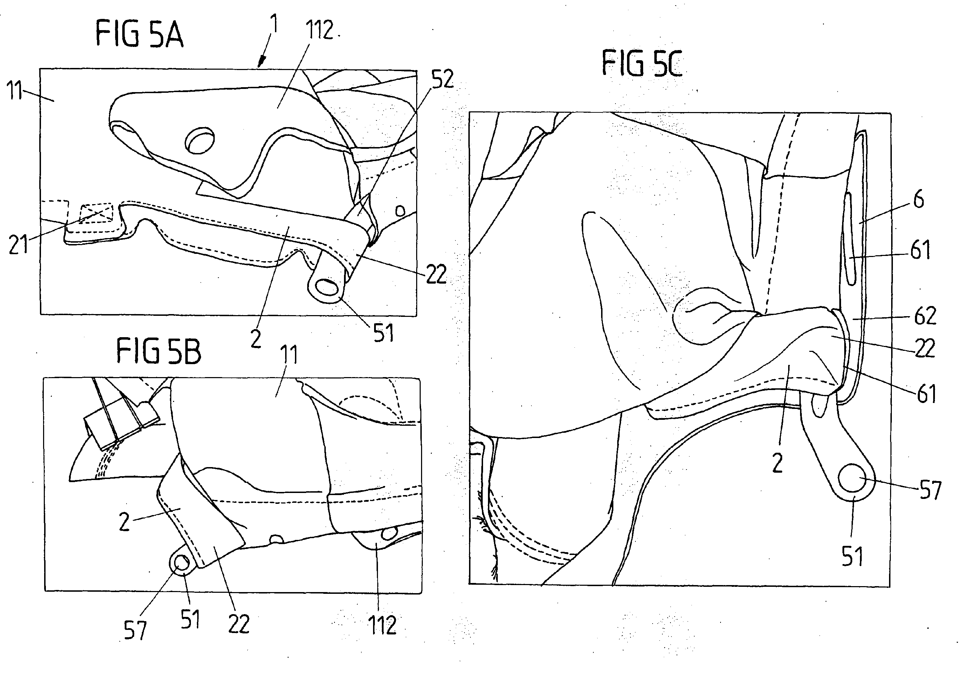

Die Fig. 5a bis 5d betreffen eine dritte Variante zum Befestigen eines Abschnittes 22 eines Fangbandes 2 an einem Fahrzeugteil. Hierbei bildet das Fangband 2 eine Schlaufe, deren offene Enden 21 zusammen an einem Randabschnitt einer Pelviskammer 11 fest angenäht sind. Ein geschlossenes Ende 22 des schlaufenförmigen Fangbandes 2 ist an einem Ende 51 eines Befestigungsbleches 52 einer Gasgenerator-Haltevorrichtung eingehängt, wodurch das Fangband 2 (und damit die Pelviskammer 11) an dem Befestigungsblech 52 fixiert ist.

Das Ende 51 des Befestigungsbleches 52 knickt vom Gassack 1 hin weg ab, so dass ein Abrutschen des schlaufenförmigen Fangbandes 2 von dem Befestigungsblech 52 vermieden wird und eine sichere Verbindung zwischen Fangband 2 und Befestigungsblech 52 besteht (vgl. Fig. 5c, die das abkickende Ende 51 des Befestigungsbleches 52 zeigt).

Gemäß der Fig. 5c ist zusätzlich ein unteres Teil 6 einer Modulabdeckung zum Abdecken eines Gassackmoduls, dem der Gassack 1 zugehört, angeordnet (vgl. Fig. 3c). Das geschlossene Ende 22 des Fangbandes 2 ist wie in den Fig. 5a, 5b an einem Ende 51 eines Befestigungsbleches eingehängt. Durch einen seitlichen Rand 62 des Teiles 6 ist die Schlaufe des Fangbandes seitlich abgedeckt.

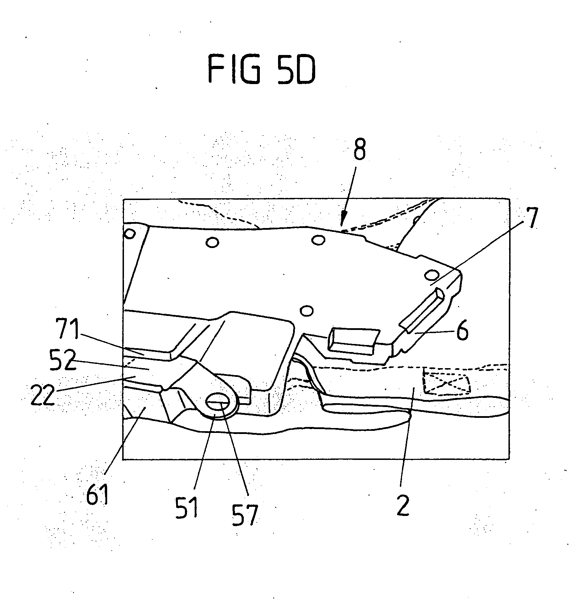

Die Fig. 5d zeigt ein vollständiges Modulgehäuse 8 für ein Gassackmodul, das neben einem unteren Teil 6, ein oberes Teil 7 aufweist, das beim Einbau des Moduls in einem Sitz zu einer Außenseite des Sitzes weist. Zwischen das obere und das untere Teil 6, 7 wird ein Befestigungsblech 52 einer Gasgenerator-Haltevorrichtung eingelegt. Dabei ist um ein abgewinkeltes Ende 51 des Befestigungsbleches 52 ein schlaufenförmiges Ende 22 eines Fangbandes gelegt und so mit dem Befestigungsblech 52 verbunden.

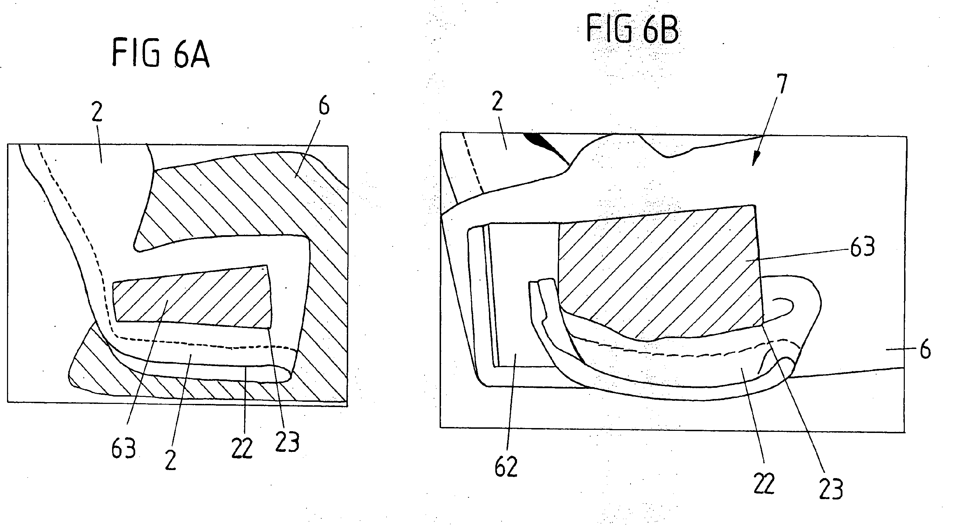

Die Fig. 6a, 6b betreffen eine vierte Variante zum Befestigen eines Abschnittes eines Fangbandes an einem Fahrzeugteil. Bei dieser Variante wird ein Endabschnitt 22 eines Fangbandes 2 an einem unteren Teil 6 eines Modulgehäuses eines Gassackmoduls befestigt. Wie weiter oben bereits beschrieben, deckt das untere Teil 6 eine Seite des Gassacksmoduls ab, die bei Einbau des Moduls in einen Fahrzeugsitz einer Sitzaußenseite abgewandt ist. Das untere Teil 6 ist mit dem Sitz fest verbunden, wobei diese Verbindung auch beim Aufblasen des Gassacks erhalten bleibt. Das Ende 22 eines Fangbandes 2 weist eine schlitzförmige Öffnung 23 auf, über die das Fangband 2 an einer Befestigungslasche 63 des unteren Teils 6 des Modulgehäuses eingehängt ist.

Durch das Einhängen des freien Endes 22 an dem unteren Teil 6 wird das Fangband 2 fest mit dem unteren Teil 6 verbunden, wodurch die gewünschte Positionierung der Pelviskammer (in Fig. 6a nicht gezeigt) des Seitengassacks bewirkt wird. Das dem freien Ende 22 gegenüber liegende Ende des Fangbandes 2 ist hierbei wie in den vorangegangenen Beispielen mit der Pelviskammer des Seitengassacks verbunden, zum Beispiel fest vernäht.

Fig. 6b zeigt das untere Teil 6 in einer Seitenansicht. Das untere Teil 6 weist einen seitlichen Rand 62 auf, in dem die Lasche 63 zum Einhängen des Fangbandes gebildet ist.

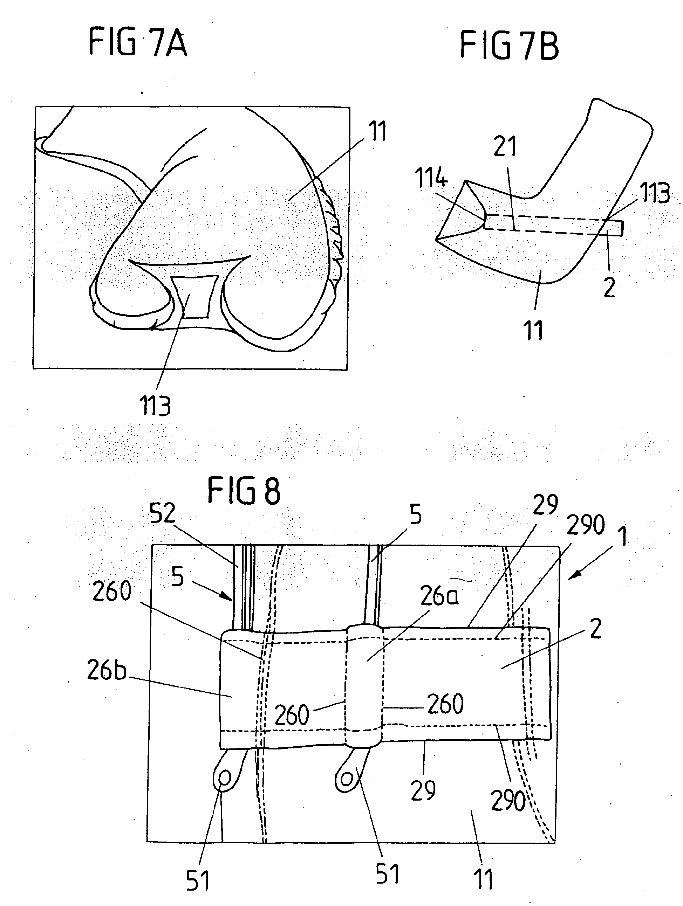

Die Fig. 7a, 7b zeigen eine Variante zum Befestigen eines Fangbandes 2 an einer Gassackkammer 11. Ein Ende 21 des Fangbandes 2 wird über eine Öffnung 113 des Gassacks 11 in das Gassackinnere geführt und dort mit einem Abschnitt 114 der Gassackinnenwand verbunden, zum Beispiel vernäht.

In Fig. 8 ist ein mit einem Gassack verbundenes Fangband gemäß dem zweiten Aspekt der vorliegenden Erfindung dargestellt. Ein Fangband 2 erstreckt über nahezu die gesamte Breite der Oberfläche einer Gassack-Kammer 11 und ist entlang seiner Längsseiten 29 mit einem Gassack 1 mittels Längsnähten 290 vernäht, so dass es fest an dem Gassack 1 befestigt ist.

Das Fangband 2 weist zwei Schlaufen 26a, 26b als Verbindungsstrukturen auf, die jeweils an einem länglichen Befestigungsblech 52 einer Haltevorrichtung 5 eingehängt sind und somit mit der Haltevorrichtung 5 verbunden sind. Das Befestigungsblech 52 stellt einen Befestigungsabschnitt der Haltevorrichtung dar. Je nachdem, in welche der Schlaufen 26a, 26b das Befestigungsblech 52 eingehängt ist, wird der Gassack 1 nach dem Aufblasen eine bestimmte Form einnehmen, die von der Position der Verbindungsschlaufe 26a bzw. 26b am Gassack abhängt.

Dass das Befestigungsblech sowohl durch die eine als auch durch die andere Schlaufe 26a bzw. 26b durchführbar ist, ist in Fig. 8 dadurch illustriert, dass zwei Befestigungsbleche 5 angeordnet sind, die jeweils in eine Schlaufe 26a, 26b eingehängt sind. Ein Gassackmodul weist jedoch immer nur ein Befestigungsblech auf, das wahlweise entweder in die Schlaufe 26a oder in die Schlaufe 26b eingehängt werden kann.

Würde das Befestigungsblech 52 zum Beispiel in die weiter außen liegende Schlaufe 26b eingehängt, ergäbe sich ein Gassack mit einem größeren Volumen, da sich die Kammer 11, an dem das Fangband 2 befestigt ist, ungehindert und komplett aufblasen könnte. Wird das Befestigungsblech 52 jedoch in die in Bezug auf die Gassackkammer 11 weiter innen angeordnete Schlaufe 26a eingehängt, wird das Volumen im oberen Bereich der Gassackkammer 11 reduziert. Somit kann durch die Wahl der Schlaufe, in die das Befestigungsblech 52 eingehängt wird, die Geometrie und das Volumen des entfalteten Gassacks verändert und einer bestimmten Verwendung des Gassacks angepasst werden.

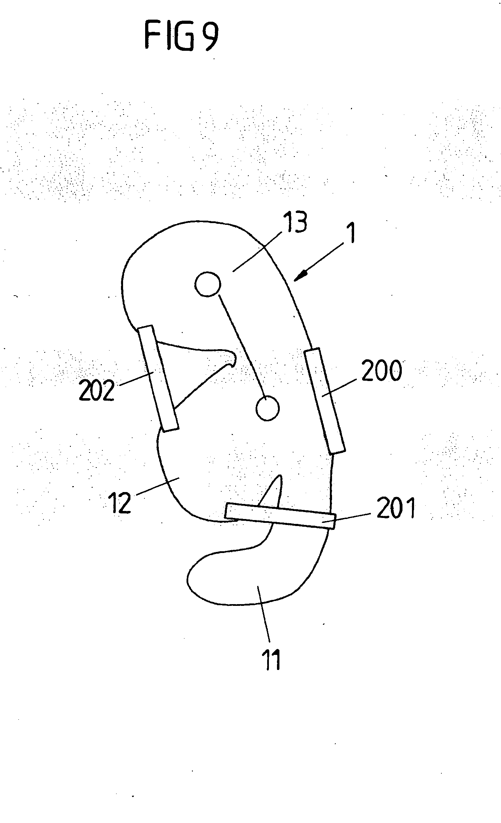

Fig. 9 zeigt einen Gassack 1 mit einer Pelvis- und einer Thoraxkammer 11, 12 sowie einer zusätzlichen Kopfkammer 13. Der Gassack 1 weist Funktionsbändern 200, 201, 202 auf, die zusätzlich zu einem Fangband (nicht dargestellt), das die Pelviskammer 11 des Gassacks 1 fixiert, angebracht sind. Die Funktionsbänder 201, 202 sind dabei zwischen verschiedenen Kammern 11, 12 bzw. 12, 13 des Gassacks 1 angeordnet, wodurch diese Kammern beim und nach dem Entfalten zueinander positioniert werden. Das Fangband 200 ist an einem in Vorwärtsfahrtrichtung des Fahrzeugs gesehen hinteren Abschnitt des Seitengassacks 1 angeordnet (gegenüber der Kammer 12) und dient zur Stabilisierung des aufgeblasenen Gassackes.

### Bezugszeichenliste

- 1: Seitengassack
- 11: Pelviskammer
- 111: Randbereich
- 112: Lasche
- 113: Öffnung
- 114: Gassackinnenwand-Abschnitt
- 12: Thoraxkammer
- 121: Belüftungsöffnung
- 122: Verstärkungslage
- 13: Kopfkammer
- 2: Fangband
- 21, 21 a, 21 b: Endabschnitt
- 22: freies Ende
- 23: Befestigungsöffnung
- 24a, 24b: Laschenabschnitt
- 25: Schraube
- 26, 26a, 26b: Schlaufe
- 200: Stabilisierungsband
- 201,202: Verbindungsband
- 260: Quernaht
- 29: Längsseite
- 290: Längsnaht
- 5: Befestigungsschiene
- 51: Endabschnitt
- 52: Befestigungsblech
- 55a, 55b: Gewindebolzen
- 57: Befestigungsöffnung
- 6: unteres Teil
- 61: Öffnung
- 62: Seitenrand
- 63: Befestigungslasche
- 7: oberes Teil
- 71: Abschnitt
- 8: Modulgehäuse

## Patentansprüche

1. Seitengassackanordnung für ein Fahrzeuginsassen-Rückhaltesystem mit einem zum Schutz eines Fahrzeuginsassen vorgesehenen Gassack, der mindestens zwei aufblasbare Kammern (11, 12, 13) aufweist, die jeweils nach dem Aufblasen eine bestimmte Lage in einem Kraftfahrzeug einnehmen sollen, wobei ein Funktionsband (2), mit einem Abschnitt (22) außerhalb des Gassacks (1) festlegbar und mit einem Abschnitt (21, 21a, 21 b) auf mindestens eine der Kammern (11) des Gassacks (1) eine Haltekraft ausübt, die bewirkt, dass die Kammer (11) nach dem Aufblasen die für sie vorgesehene Lage einnimmt,
**dadurch gekennzeichnet,**
**dass** der außerhalb des Gassacks (1) befestigbare Abschnitt des Funktionsbandes (2) an einem Fahrzeugteil befestigbar ist und dass mehrere Abschnitte (21, 21a, 21b) des Funktionsbandes (2) mit dem Gassack (1) verbunden sind, so dass eine gezielte Formgebung des aufgeblasenen Gassacks (1) durch das Funktionsband (2) möglich ist und der Gassack (1) zwischen den Abschnitten (21a, 21b) des Funktionsbandes (2) gerafft werden kann.

2. Seitengassackanordnung nach Anspruch 1, **dadurch gekennzeichnet, dass** sich von den Kammern (11, 12, 13) des Gassacks nach Entfalten des Gassacks (1) eine erste Kammer (11) in Bezug auf die vertikale Fahrzeugachse zumindest abschnittsweise unterhalb der mindestens einen weiteren Kammer (12, 13) erstreckt und das Funktionsband (2) die Haltekraft auf die erste Kammer (11) ausübt.

3. Seitengassackanordnung nach Anspruch 2, **dadurch gekennzeichnet, dass** die erste Kammer (11) zum Schutz der Pelvisregion des Fahrzeuginsassen ausgebildet ist.

4. Seitengassackanordnung nach Anspruch 3, **dadurch gekennzeichnet, dass** die vom Funktionsband (2) auf die erste Kammer (11) ausgeübte Haltekraft verhindert, dass sich die erste Kammer (11) nach dem Entfalten vollständig oder mit einem Abschnitt auf Höhe des Thorax des Fahrzeuginsassen erstreckt.

5. Seitengassackanordnung nach einem der vorhergehenden Ansprüche, **dadurch gekennzeichnet, dass** das Funktionsband (2) mit mindestens einem Abschnitt (21, 21a, 21 b) an der ersten Kammer (11) des Gassacks (1) befestigt ist.

6. Seitengassackanordnung nach einem der vorhergehenden Ansprüche, **dadurch gekennzeichnet, dass** das Fahrzeugteil ein Teil eines Fahrzeugsitzes, eines Gassackmoduls oder der Fahrzeugkarosserie ist.

7. Seitengassackanordnung nach einem der vorhergehenden Ansprüche, **dadurch gekennzeichnet, dass** der Gassack eine zweite Kammer (12) aufweist, die sich oberhalb eines Abschnittes der ersten Kammer (11) erstreckt und der Thoraxregion des Fahrzeuginsassen zugeordnet ist.

8. Seitengassackanordnung nach einem der vorhergehenden Ansprüche, **dadurch gekennzeichnet, dass** der Gassack eine dritte Kammer (13) aufweist, die sich oberhalb der ersten Kammer (11) erstreckt und der Kopfregion des Fahrzeuginsassen zugeordnet ist.

9. Seitengassackanordnung nach einem der vorhergehenden Ansprüche, **dadurch gekennzeichnet, dass** die Kammern (11, 12, 13) des Gassacks (1) nach dem Aufblasen unterschiedliche Innendrücke aufweisen.

10. Seitengassackanordnung nach einem der vorhergehenden Ansprüche, **dadurch gekennzeichnet, dass** die erste Kammer (11) durch einen Randbereich (111) begrenzt ist und ein Abschnitt (21) des Funktionsbandes (2) an dem Randbereich (111) befestigt ist.

11. Seitengassackanordnung nach einem der vorhergehenden Ansprüche, **dadurch gekennzeichnet, dass** das Funktionsband (2) mit dem Gassack (1) vernäht oder verklebt ist.

12. Seitengassackanordnung nach einem der vorhergehenden Ansprüche, **dadurch gekennzeichnet, dass** das Funktionsband (2) eine Schlaufe oder eine Tasche ausbildet.

13. Seitengassackanordnung nach einem der vorhergehenden Ansprüche, **gekennzeichnet durch** mindestens ein zusätzliches Funktionsband (200, 201, 202), das mindestens zwei Abschnitte des Gassacks (1) miteinander verbindet.

14. Seitengassackanordnung nach einem der vorhergehenden Ansprüche, **dadurch gekennzeichnet, dass** das Funktionsband (2) zumindest abschnittsweise innerhalb des Gassacks (1) verläuft.

15. Seitengassackanordnung nach einem der vorhergehenden Ansprüche, **dadurch gekennzeichnet, dass** das Funktionsband (2) eine Naht aufweist, die zur Verkürzung der wirksamen Länge des Funktionsbandes (2) mindestens zwei Abschnitte des Funktionsbandes (2) miteinander verbindet, und die so ausgebildet ist, dass sie beim Entfalten des Gassacks (1) reißt.

16. Seitengassackanordnung nach einem der vorhergehenden Ansprüche, **dadurch gekennzeichnet, dass** das Funktionsband (2) so ausgebildet ist, dass es sich beim Aufblasen des Gassacks (1) mit Gas füllt.

17. Seitengassackanordnung nach einem der vorhergehenden Ansprüche, **dadurch gekennzeichnet, dass** das Funktionsband (2) einstückig mit dem Gassack (1) ausgebildet ist.

18. Seitengassackanordnung nach einem der vorhergehenden Ansprüche, **gekennzeichnet durch** einen Gasgenerator zum Aufblasen des Gassacks (1) sowie eine Haltevorrichtung (5), über die der Gasgenerator mit einem Teil des Fahrzeugsitzes oder der Fahrzeugkarosserie verbunden werden kann.

19. Seitengassackanordnung nach Anspruch 18, **dadurch gekennzeichnet, dass** die Haltevorrichtung (5) einen Befestigungsabschnitt (52) aufweist, über den sie mit einem Teil des Fahrzeugsitzes oder der Fahrzeugkarosserie verbunden werden kann.

20. Seitengassackanordnung nach Anspruch 19, **dadurch gekennzeichnet, dass** der Befestigungsabschnitt (52) längserstreckt ausgebildet ist.

21. Seitengassackanordnung nach Anspruch 19 oder 20, **dadurch gekennzeichnet, dass** ein Abschnitt (22) des Funktionsbandes (2) zusammen mit dem Befestigungsabschnitt (52) der Haltevorrichtung (5) an einem Teil des Fahrzeugsitzes oder der Fahrzeugkarosserie befestbar ist, insbesondere verschraubbar ist.

22. Seitengassackanordnung nach einem der Ansprüche 19 oder 20, **dadurch gekennzeichnet, dass** der Befestigungsabschnitt (52) über einen Bolzen (55a, 55b) mit einem weiteren Teil der Haltevorrichtung (5) verbunden ist und ein Abschnitt (22) des Funktionsbandes (2) an dem Bolzen (55a, 55b) befestigt ist.

23. Seitengassackanordnung nach einem der Ansprüche 19 oder 20, **dadurch gekennzeichnet, dass** ein Abschnitt (22) des Funktionsbandes (2) als Schlaufe ausgebildet ist, die an dem Befestigungsabschnitt (52) der Haltevorrichtung (5) eingehängt ist.

24. Seitengassackanordnung nach einem der Ansprüche 19 bis 23, **dadurch gekennzeichnet, dass** der Befestigungsabschnitt (52) einen vom Gassack (1) weg abknickenden Endabschnitt (51) aufweist, an dem die Schlaufe des Funktionsbandes (2) eingehängt ist.

25. Seitengassackanordnung nach einem der vorhergehenden Ansprüche, **dadurch gekennzeichnet, dass** der Gassack Bestandteil eines Gassackmoduls ist, das von einer Modulabdeckung (8) umgeben ist und ein Abschnitt (22) des Funktionsbandes (2) an der Modulabdeckung (8) befestigt ist.

26. Seitengassackanordnung nach Anspruch 25, **dadurch gekennzeichnet, dass** die Modulabdeckung ein oberes Teil und ein unteres Teil (6, 7) aufweist, wobei das obere Teil 87) nach Montage des Gassackmoduls in der Lehne eines Fahrzeugsitzes einer Seitenfläche der Lehne zugewandt ist, während das untere Teil (6) der Seitenfläche abgewandt ist, und ein Abschnitt (22) des Funktionsbandes (2) mit dem unteren Teil (6) verbunden ist.

27. Seitengassackanordnung nach Anspruch 26, **dadurch gekennzeichnet, dass** das untere Teil der Modulabdeckung eine Befestigungslasche (63) aufweist, an die ein Abschnitt (22) des Funktionsbandes (2) eingehängt ist.

28. Seitengassackanordnung für ein Fahrzeuginsassen-Rückhaltesystem mit einem aufblasbaren Gassack, einem Gasgenerator zum Aufblasen des Gassacks sowie einer Haltevorrichtung zum Halten des Gasgenerators, wobei der Gassack mindestens eine Verbindungsstruktur zum Verbinden des Gassacks mit der Haltevorrichtung aufweist,
**dadurch gekennzeichnet, dass**
die Verbindungsstruktur (26a, 26b) an einem an dem Gassack (1) befestigten Funktionsband (2) vorgesehen ist, wobei das Funktionsband (2) mindestens zwei zum Verbinden mit der Haltevorrichtung (5) geeignete Verbindungsstrukturen (26a, 26b) aufweist, wobei wahlweise jeweils nur eine der Verbindungsstrukturen (26a, 26b) mit der Haltevorrichtung (5) zu verbinden ist

29. Seitengassackanordnung nach Anspruch 28, **dadurch gekennzeichnet, dass** die Verbindungsstrukturen so ausgebildet und angeordnet sind, dass die Form, die der Gassack (1) nach dem Entfalten aufweist, davon abhängt, welche der Verbindungsstrukturen (26a, 26b) mit der Haltevorrichtung (5) verbunden ist.

30. Seitengassackanordnung nach Anspruch 28 oder 29, **dadurch gekennzeichnet, dass** das Funktionsband (2) entlang einer Oberfläche des Gassacks (1) angeordnet ist.

31. Seitengassackanordnung nach einem der Ansprüche 28 bis 30, **dadurch gekennzeichnet, dass** die Verbindungsstrukturen (26a, 26b) des Funktionsbandes (2) schlaufen- oder taschenförmig ausgebildet sind.

32. Seitengassackanordnung nach einem der Ansprüche 28 bis 31, **dadurch gekennzeichnet, dass** die Haltevorrichtung (5) einen längserstreckten Befestigungsabschnitt (52) zum Verbinden der Haltevorrichtung mit einem Teil eines Fahrzeugsitzes oder einer Fahrzeugkarosserie aufweist.

33. Seitengassackanordnung nach Anspruch 32, **dadurch gekennzeichnet, dass** das Funktionsband (2) quer zu seiner Längsrichtung ausgebildete Schlaufen (26a, 26b) als Verbindungsstrukturen aufweist, durch die der Befestigungsabschnitt (52) der Haltevorrichtung (5) hindurch geführt werden kann.

34. Seitengassackanordnung nach Anspruch 32 und 33, **dadurch gekennzeichnet, dass** der Befestigungsabschnitt (52) näherungsweise parallel zu Schlaufen (26a, 26b) des Funktionsbandes (2) verläuft.

35. Seitengassackanordnung nach Anspruch 33 oder 34, **dadurch gekennzeichnet, dass** sich die Schlaufen (26a, 26b) jeweils in Durchführrichtung über die gesamte Breite des Funktionsbandes (2) erstrecken.

36. Seitengassackanordnung nach einem der Ansprüche 33 bis 35, **dadurch gekennzeichnet, dass** das Funktionsband (2) mehrlagig ist und zwischen den Schlaufen (26a, 26b) entlang seiner Längsseiten (29) mit dem Gassack (1) vernäht ist.

37. Seitengassackanordnung nach einem der Ansprüche 33 bis 36, **dadurch gekennzeichnet, dass** die Schlaufen (26a, 26b) durch quer zur Längsrichtung des Funktionsbandes (2) verlaufende Nähte (260) gebildet sind.

38. Seitengassackanordnung nach einem der Ansprüche 32 bis 34, **dadurch gekennzeichnet, dass** ein Ende (51) des Befestigungsabschnittes (52) der Haltevorrichtung (5) vom Gassack (1) weg abgewinkelt ausgebildet ist und ein Abrutschen eines an dem Befestigungsabschnittes (52) eingehängten Funktionsbandes (2) verhindert.

39. Seitengassackanordnung nach einem der Ansprüche 28 bis 38, **dadurch gekennzeichnet, dass** das Volumen, das der Gassack (1) nach Entfalten einnimmt, davon abhängt, welche der vorhandenen Verbindungsstrukturen (26a, 26b) mit der Haltevorrichtung (5) verbunden ist.

## Claims

1. Side gas bag arrangement for a vehicle occupant restraint system, having an airbag which is provided for the protection of a vehicle occupant and which has at least two inflatable chambers (11, 12, 13) which are in each case to assume a specific position in a motor vehicle after inflation, wherein a functional band (2) can be secured by means of a portion (22) outside the airbag (1) and exerts by means of a portion (21, 21 a, 21 b) on at least one of the chambers (11) of the airbag (1) a holding force which has the effect that the chamber (11), after inflation, assumes the position provided for it,
**characterized in that**,
the portion of the functional band (2) which can be fastened outside the airbag (1) can be fastened to a vehicle part and **in that** a plurality of portions (21, 21 a, 21b) of the functional band (2) are connected to the airbag (1), so that a directed shaping of the inflated airbag (1) is possible by the functional band (2) and the airbag (1) can be tautened between the portions (21 a, 21 b) of the functional band (2).

2. Side airbag arrangement according to Claim 1, **characterized in that**, after the deployment of the airbag (1), a first chamber (11) of the chambers (11, 12, 13) of the airbag extends, at least in portions, underneath the at least one further chamber (12, 13) with respect to the vertical vehicle axis, and the functional band (2) exerts the holding force on the first chamber (11).

3. Side airbag arrangement according to Claim 2, **characterized in that** the first chamber (11) is designed to protect the pelvic region of the vehicle occupant.

4. Side airbag arrangement according to Claim 3, **characterized in that** the holding force exerted by the functional band (2) on the first chamber (11) prevents the situation where, after deployment, the first chamber (11) extends completely or with a portion level with the thorax of the vehicle occupant.

5. Side airbag arrangement according to one of the preceding claims, **characterized in that** the functional band (2) is fastened with at least one portion (21, 21 a, 21 b) to the first chamber (11) of the airbag (1).

6. Side airbag arrangement according to one of the preceding claims, **characterized in that** the vehicle part is part of a vehicle seat, of an airbag module or of the vehicle body.

7. Side airbag arrangement according to one of the preceding claims, **characterized in that** the airbag has a second chamber (12) which extends above a portion of the first chamber (11) and which is assigned to the thorax region of the vehicle occupant.

8. Side airbag arrangement according to one of the preceding claims, **characterized in that** the airbag has a third chamber (13) which extends above the first chamber (11) and which is assigned to the head region of the vehicle occupant.

9. Side airbag arrangement according to one of the preceding claims, **characterized in that** the chambers (11, 12, 13) of the airbag (1) have different internal pressures after inflation.

10. Side airbag arrangement according to one of the preceding claims, **characterized in that** the first chamber (11) is delimited by a marginal region (111), and a portion (21) of the functional band (2) is fastened to the marginal region (111).

11. Side airbag arrangement according to one of the preceding claims, **characterized in that** the functional band (2) is stitched or adhesively bonded to the airbag (1).

12. Side airbag arrangement according to one of the preceding claims, **characterized in that** the functional band (2) forms a loop or a pocket.

13. Side airbag arrangement according to one of the preceding claim, **characterized by** at least one additional functional band (200, 201, 202) which connects at least two portions of the airbag (1) to one another.

14. Side airbag arrangement according to one of the preceding claims, **characterized in that** the functional band (2) runs, at least in portions, inside the airbag (1).

15. Side airbag arrangement according to one of the preceding claims, **characterized in that** the functional band (2) has a seam which connects at least two portions of the functional band (2) to one another so as to shorten the effective length of the functional band (2) and which is designed such that it tears during the deployment of the airbag (1).

16. Side airbag arrangement according to one of the preceding claims, **characterized in that** the functional band (2) is designed such that it is filled with gas during the inflation of the airbag (1).

17. Side airbag arrangement according to one of the preceding claims, **characterized in that** the functional band (2) is produced in one piece with the airbag (1).

18. Side airbag arrangement according to one of the preceding claims, **characterized by** a gas generator for inflating the airbag (1) and by a holding device (5), via which the gas generator can be connected to part of the vehicle seat or of the vehicle body.

19. Side airbag arrangement according to Claim 18, **characterized in that** the holding device (5) has a fastening portion (52), via which it can be connected to part of the vehicle seat or of the vehicle body.

20. Side airbag arrangement according to Claim 19, **characterized in that** the fastening portion (52) is of longitudinally extended design.

21. Side airbag arrangement according to Claim 19 or 20, **characterized in that** a portion (22) of the functional band (2) can be fastened, in particular screwed, together with the fastening portion (52) of the holding device (5), to part of the vehicle seat or of the vehicle body.

22. Side airbag arrangement according to either one of Claims 19 or 20, **characterized in that** the fastening portion (52) is connected to a further part of the holding device (5) via a bolt (55a, 55b), and a portion (22) of the functional band (2) is fastened to the bolt (55a, 55b).

23. Side airbag arrangement according to either one of Claims 19 or 20, **characterized in that** a portion (22) of the functional band (2) is designed as a loop which is suspended on the fastening portion (52) of the holding device (5).

24. Side airbag arrangement according to one of Claims 19 to 23, **characterized in that** the fastening portion (52) has an end portion (51) which bends away from the airbag (1) and on which the loop of the functional band (2) is suspended.

25. Side airbag arrangement according to one of the preceding claims, **characterized in that** the airbag is an integral part of an airbag module which is surrounded by a module cover (8), and a portion (22) of the functional band (2) is fastened to the module cover (8).

26. Side airbag arrangement according to Claim 25, **characterized in that** the module cover has an upper part and a lower part (6, 7), after the mounting of the airbag module in the back-rest of a vehicle seat the upper part (7) facing a side face of the back-rest, while the lower part (6) faces away from the side face, and a portion (22) of the functional band (2) being connected to the lower part (6).

27. Side airbag arrangement according to Claim 26, **characterized in that** the lower part of the module cover has a fastening strap (63) on which a portion (22) of the functional band (2) is suspended.

28. Side airbag arrangement for a vehicle occupant restraint system, having an inflatable airbag, a gas generator for inflating the airbag and a holding device for holding the gas generator, the airbag having at least one connecting structure for the connection of the airbag to the holding device,
**characterized in that**
the connecting structure (26a, 26b) is provided on a functional band (2) fastened to the airbag (1), wherein the functional band (2) has at least two connecting structures (26a, 26b) suitable for connection to the holding device (5), in which case selectively in each case only one of the connecting structures (26a, 26b) is to be connected to the holding device (5).

29. Side airbag arrangement according to Claim 28, **characterized in that** the connecting structures are designed and arranged such that the shape which the airbag (1) has after deployment depends on which of the connecting structures (26a, 26b) is connected to the holding device (5).

30. Side airbag arrangement according to Claim 28 or 29, **characterized in that** the functional band (2) is arranged along a surface of the airbag (1).

31. Side airbag arrangement according to one of Claims 28 to 30, **characterized in that** the connecting structures (26a, 26b) of the functional band (2) are of loop-shaped or pocket-shaped design.

32. Side airbag arrangement according to one of Claims 28 to 31, **characterized in that** the holding device (5) has a longitudinally extended fastening portion (52) for connecting the holding device to part of a vehicle seat or of a vehicle body.

33. Side airbag arrangement according to Claim 32, **characterized in that** the functional band (2) has as connecting structures loops (26a, 26b) which are formed transversely to its longitudinal direction and through which the fastening portion (52) of the holding device (5) can be led.

34. Side airbag arrangement according to Claims 32 and 33, **characterized in that** the fastening portion (52) runs approximately parallel to loops (26a, 26b) of the functional band (2).

35. Side airbag arrangement according to Claim 33 or 34, **characterized in that** the loops (26a, 26b) extend in each case, in the lead-through direction, over the entire width of the functional band (2).

36. Side airbag arrangement according to one of Claims 33 to 35, **characterized in that** the functional band (2) is multi-ply and is stitched along its longitudinal sides (29) to the airbag (1) between the loops (26a, 26b).

37. Side airbag arrangement according to one of Claims 33 to 36, **characterized in that** the loops (26a, 26b) are formed by seams (260) running transversely with respect to the longitudinal direction of the functional band (2).

38. Side airbag arrangement according to one of Claims 32 to 34, **characterized in that** one end (51) of the fastening portion (52) of the holding device (5) is designed so as to be angled away from the airbag (1) and prevents a functional band (2) suspended on the fastening portion (52) from slipping off.

39. Side airbag arrangement according to one of Claims 28 to 38, **characterized in that** the volume which the airbag (1) occupies after deployment depends on which of the connecting structures (26a, 26b) present is connected to the holding device (5).

## Revendications

1. Agencement de sac à gaz latéral pour un système de retenue d'occupant de véhicule présentant un sac à gaz prévu pour protéger un occupant de véhicule et comportant au moins deux chambres (11, 12, 13) gonflables qui doivent occuper chacune une position déterminée dans un véhicule automobile après le gonflage, une bande fonctionnelle (2) pouvant être fixée par une section (22) en dehors du sac à gaz (1) et exerçant une force de retenue par une section (21, 21a, 21b) sur au moins l'une des chambres (11) du sac à gaz (1), laquelle force a pour effet que la chambre (11) occupe la position prévue pour elle après le gonflage,
**caractérisé en ce**
**que** la section, pouvant être fixée en dehors du sac à gaz (1), de la bande fonctionnelle (2) peut être fixée sur une partie de véhicule et en ce que plusieurs sections (21, 21a, 21b) de la bande fonctionnelle (2) sont reliées au sac à gaz (1) de sorte qu'il soit possible de former de manière ciblée le sac à gaz gonflé (1) par la bande fonctionnelle (2) et le sac à gaz (1) puisse être serré entre les sections (21a, 21 b) de la bande fonctionnelle (2).

2. Agencement de sac à gaz latéral selon la revendication 1, **caractérisé en ce que** des chambres (11, 12, 13) du sac à gaz (1) après son déploiement, une première chambre (11) s'étend, par rapport à l'axe vertical du véhicule, au moins par section au-dessous d'au moins une autre chambre (12, 13) et **en ce que** la bande fonctionnelle (2) exerce la force de retenue sur la première chambre (11).

3. Agencement de sac à gaz latéral selon la revendication 2, **caractérisé en ce que** la première chambre (11) est réalisée afin de protéger la région du bassin de l'occupant du véhicule.

4. Agencement de sac à gaz latéral selon la revendication 3, **caractérisé en ce que** la force de retenue exercée par la bande fonctionnelle (2) sur la première chambre (11) empêche qu'après le déploiement, cette dernière ne s'étende totalement ou par une section à hauteur du thorax de l'occupant du véhicule.

5. Agencement de sac à gaz latéral selon l'une quelconque des revendications précédentes, **caractérisé en ce que** la bande fonctionnelle (2) est fixée par au moins une section (21, 21a, 2 1 b) sur la première chambre (11) du sac à gaz (1).

6. Agencement de sac à gaz latéral selon l'une quelconque des revendications précédentes, **caractérisé en ce que** la partie du véhicule est une partie d'un siège de véhicule, d'un module de sac à gaz ou de la carrosserie du véhicule.

7. Agencement de sac à gaz latéral selon l'une quelconque des revendications précédentes, **caractérisé en ce que** le sac à gaz présente une deuxième chambre (12) qui s'étend au-dessus d'une section de la première chambre (11) et est associée à la région du thorax de l'occupant du véhicule.

8. Agencement de sac à gaz latéral selon l'une quelconque des revendications précédentes, **caractérisé en ce que** le sac à gaz présente une troisième chambre (13) qui s'étend au-dessus de la première chambre (11) et est associée à la région de la tête de l'occupant du véhicule.

9. Agencement de sac à gaz latéral selon l'une quelconque des revendications précédentes, **caractérisé en ce que** les chambres (11, 12, 13) du sac à gaz (1) présentent, après le gonflage, différentes pressions internes.

10. Agencement de sac à gaz latéral selon l'une quelconque des revendications précédentes, **caractérisé en ce que** la première chambre (11) est délimitée par une zone de bord (111) et **en ce qu'**une section (21) de la bande fonctionnelle (2) est fixée sur la zone de bord (111).

11. Agencement de sac à gaz latéral selon l'une quelconque des revendications précédentes, **caractérisé en ce que** la bande fonctionnelle (2) est cousue ou collée au sac à gaz (1).

12. Agencement de sac à gaz latéral selon l'une quelconque des revendications précédentes, **caractérisé en ce que** la bande fonctionnelle (2) réalise une boucle ou une poche.

13. Agencement de sac à gaz latéral selon l'une quelconque des revendications précédentes, **caractérisé par** au moins une bande fonctionnelle supplémentaire (200, 201, 202) qui relie au moins deux sections du sac à gaz (1) entre elles.

14. Agencement de sac à gaz latéral selon l'une quelconque des revendications précédentes, **caractérisé en ce que** la bande fonctionnelle (2) s'étend au moins par section dans le sac à gaz (1).

15. Agencement de sac à gaz latéral selon l'une quelconque des revendications précédentes, **caractérisé en ce que** la bande fonctionnelle (2) présente une couture qui relie au moins deux sections de la bande fonctionnelle (2) entre elles en vue de raccourcir la longueur utile de la bande fonctionnelle (2), et qui est réalisée de sorte à se déchirer lors du déploiement du sac à gaz (1).

16. Agencement de sac à gaz latéral selon l'une quelconque des revendications précédentes, **caractérisé en ce que** la bande fonctionnelle (2) est réalisée de sorte à se remplir de gaz lors du gonflage du sac à gaz (1).

17. Agencement de sac à gaz latéral selon l'une quelconque des revendications précédentes, **caractérisé en ce que** la bande fonctionnelle (2) est réalisée d'un seul tenant avec le sac à gaz (1).

18. Agencement de sac à gaz latéral selon l'une quelconque des revendications précédentes, **caractérisé par** un générateur à gaz pour le gonflage du sac à gaz (1) ainsi que par un dispositif de retenue (5) pouvant relier le générateur à gaz à une partie du siège du véhicule ou à la carrosserie du véhicule.

19. Agencement de sac à gaz latéral selon la revendication 18, **caractérisé en ce que** le dispositif de retenue (5) présente une section de fixation (52) pouvant le relier à une partie du siège du véhicule ou à la carrosserie du véhicule.

20. Agencement de sac à gaz latéral selon la revendication 19, **caractérisé en ce que** la section de fixation (52) est réalisée étendue en longueur.

21. Agencement de sac à gaz latéral selon la revendication 19 ou 20, **caractérisé en ce qu'**une section (22) de la bande fonctionnelle (2) conjointement avec la section de fixation (52) du dispositif de retenue (5) peut être fixée, en particulier vissée à une partie du siège du véhicule ou à la carrosserie du véhicule.

22. Agencement de sac à gaz latéral selon l'une quelconque des revendications 19 ou 20, **caractérisé en ce que** la section de fixation (52) est reliée par un boulon (55a, 55b) à une autre partie du dispositif de retenue (5) et **en ce qu'**une section (22) de la bande fonctionnelle (2) est fixée au boulon (55a, 55b).

23. Agencement de sac à gaz latéral selon l'une quelconque des revendications 19 ou 20, **caractérisé en ce qu'**une section (22) de la bande fonctionnelle (2) est réalisée comme une boucle suspendue à la section de fixation (52) du dispositif de retenue (5).

24. Agencement de sac à gaz latéral selon l'une quelconque des revendications 19 à 23, **caractérisé en ce que** la section de fixation (52) présente une section d'extrémité (51) se pliant à partir du sac à gaz (1), à laquelle est suspendue la boucle de la bande fonctionnelle (2).

25. Agencement de sac à gaz latéral selon l'une quelconque des revendications précédentes, **caractérisé en ce que** le sac à gaz fait partie d'un module de sac à gaz qui est entouré par un recouvrement de module (8) et **en ce qu'**une section (22) de la bande fonctionnelle (2) est fixée sur le recouvrement de module (8).

26. Agencement de sac à gaz latéral selon la revendication 25, **caractérisé en ce que** le recouvrement de module présente une partie supérieure et une partie inférieure (6, 7), la partie supérieure (87) étant tournée, après le montage du module de sac à gaz dans le dossier d'un siège de véhicule, vers une surface latérale du dossier alors que la partie inférieure (6) est opposée à la surface latérale, et **en ce qu'**une section (22) de la bande fonctionnelle (2) est reliée à la partie inférieure (6).

27. Agencement de sac à gaz latéral selon la revendication 26, **caractérisé en ce que** la partie inférieure du recouvrement de module présente une languette de fixation (63), à laquelle est suspendue une section (22) de la bande fonctionnelle (2).

28. Agencement de sac à gaz latéral pour un système de retenue d'occupant de véhicule présentant un sac à gaz gonflable, un générateur à gaz pour le gonflage du sac à gaz ainsi qu'un dispositif de retenue pour la retenue du générateur à gaz, le sac à gaz présentant au moins une structure de liaison pour la liaison du sac à gaz avec le dispositif de retenue,
**caractérisé en ce que**
la structure de liaison (26a, 26b) est prévue sur une bande fonctionnelle (2) fixée sur le sac à gaz (1), la bande fonctionnelle (2) présentant au moins deux structures de liaison (26a, 26b) convenant à la liaison avec le dispositif de retenue (5), seule l'une des structures de liaison (26a, 26b) étant à relier au choix respectivement au dispositif de retenue (5).

29. Agencement de sac à gaz latéral selon la revendication 28, **caractérisé en ce que** les structures de liaison sont réalisées et disposées de sorte que la forme que présente le sac à gaz (1) après le déploiement dépende de la structure de liaison (26a, 26b) reliée au dispositif de retenue (5).

30. Agencement de sac à gaz latéral selon la revendication 28 ou 29, **caractérisé en ce que** la bande fonctionnelle (2) est disposée le long d'une surface du sac à gaz (1).

31. Agencement de sac à gaz latéral selon l'une quelconque des revendications 28 à 30, **caractérisé en ce que** les structures de liaison (26a, 26b) de la bande fonctionnelle (2) sont réalisées en forme de boucle ou de poche.

32. Agencement de sac à gaz latéral selon l'une quelconque des revendications 28 à 31, **caractérisé en ce que** le dispositif de retenue (5) présente une section de fixation (52) étirée en longueur pour la liaison du dispositif de retenue avec une partie d'un siège de véhicule ou avec une carrosserie de véhicule.

33. Agencement de sac à gaz latéral selon la revendication 32, **caractérisé en ce que** la bande fonctionnelle (2) présente des boucles (26a, 26b) réalisées transversalement à son sens longitudinal en guise de structures de liaison, par lesquelles la section de fixation (52) du dispositif de retenue (5) peut passer.

34. Agencement de sac à gaz latéral selon les revendications 32 et 33, **caractérisé en ce que** la section de fixation (52) s'étend approximativement parallèlement aux boucles (26a, 26b) de la bande fonctionnelle (2).

35. Agencement de sac à gaz latéral selon les revendications 33 ou 34, **caractérisé en ce que** les boucles (26a, 26b) s'étendent respectivement dans le sens de passage sur toute la largeur de la bande fonctionnelle (2).

36. Agencement de sac à gaz latéral selon l'une quelconque des revendications 33 à 35, **caractérisé en ce que** la bande fonctionnelle (2) présente plusieurs couches et est cousue entre les boucles (26a, 26b) le long de ses côtés longitudinaux (29) au sac à gaz (1).

37. Agencement de sac à gaz latéral selon l'une quelconque des revendications 33 à 36, **caractérisé en ce que** les boucles (26a, 26b) sont formées par des coutures (260) s'étendant transversalement au sens longitudinal de la bande fonctionnelle (2).

38. Agencement de sac à gaz latéral selon l'une quelconque des revendications 32 à 34, **caractérisé en ce qu'**une extrémité (51) de la section de fixation (52) du dispositif de retenue (5) est réalisée coudée à partir du sac à gaz (1) et empêche un glissement d'une bande fonctionnelle (2) suspendue à la section de fixation (52).

39. Agencement de sac à gaz latéral selon l'une quelconque des revendications 28 à 38, **caractérisé en ce que** le volume qu'occupe le sac à gaz (1) après le déploiement, dépend de la structure de liaison présente (26a, 26b) reliée au dispositif de retenue (5).
